# EUROPEAN PATENT SPECIFICATION

(11) **EP 3 290 138 B1**
(45) Date of publication and mention of the grant of the patent: **06.04.2022**
(21) Application number: 17189108.8
(22) Date of filing: 01.09.2017
(51) Int. Cl.: B23B 49/00, G01V 13/00

(54) **TARGET FOR ALIGNMENT SYSTEMS**
ZIEL FÜR AUSRICHTUNGSSYSTEME
CIBLE POUR SYSTÈMES D'ALIGNEMENT

(30) Priority: 01.09.2016 GB 201614861
(43) Date of publication of application: 07.03.2018
(73) Proprietor: Advanced Analysis and Integration Limited, Manchester M2 1EW (GB)
(72) Inventor: CORRY, John, Joseph, Cheadle Hulme SK8 7BL (GB)
(74) Representative: HGF

(56) References cited:
- WO-A1-2005/031936
- JP-A- 2010 286 264
- US-A- 2 844 977

## Description

### TECHNICAL FIELD

The invention relates to systems for locating non-visible objects particularly though not exclusively for the purpose of identifying the position of a non-visible object prior to carrying out a mechanical processing step in the vicinity of the object so located and in particular relates to targets for use in such systems.

### BACKGROUND

In the art, there are a number of alignment systems that have been devised to locate non-visible objects. For example, one such system is disclosed in EP 2 352 972, which discloses an alignment system comprising a test field generator and a test field detector having giant magnetoresistance (GMR) sensors. A common feature of such systems is the use of a magnetic or electromagnetic target for the alignment system, which is detected and used to align a tool for mechanical processing. This target typically sits in or is aligned to the non-visible object, e.g. a hole to be drilled. For example, WO 2005/031936 discloses a method of locating an electrical junction box behind wall covering, and also a box adapted for the purpose, and also a target according to the preamble of claim 1. Also, JP 2010 286264 discloses a magnetic marker that is arranged at a predetermined position relative to a non-magnetic object, and the predetermined position is probed by a magnetic probe that interacts with the magnetic marker for specifying a processing position of the non-magnetic object. US 2 844 977 discloses a tool for locating the axis of a concealed hole, in which is disposed a pin, the tool and the pin being attracted to each other by magnetism to locate the centre of the hole.

There are various deficiencies with these systems. One deficiency is that the targets if not removed from the hole after alignment may be irreparably damaged due to the action of the mechanical process, e.g. drilling or riveting. A further deficiency is that, because the targets need to be removed from the hole after alignment of the drill and before drilling of the hole, the process is typically a two-man job or requires a single operator to laboriously carry out each operation.

Embodiments of the invention may at least mitigate one or more problems associated with known arrangements.

### SUMMARY OF THE INVENTION

According to an aspect of the invention, there is provided a target according to claim 1 for use in an alignment system, the target comprising a first component having a magnetic or electromagnetic source and a second component being attachable to the first component, the second component being a sacrificial component for securing the first component proximate an object for alignment and the second component comprising a region configured to securely hold the second component in a hole. In other words, the invention comprises a target for use in an alignment system, which target comprises two components, the first component comprising a magnetic or an electromagnetic source for other target for a targeting system and a second component that may be attached or secured to first component, the second component being a sacrificial component for securing the first component proximate to an object for alignment by insertion into a hole.

The second component may be in the form of a plug for insertion into a hole to be drilled. On drilling of the hole, this sacrificial plug is broken up by the action of the drill and this enables the target to fall away from the hole for secure and safe removal and ensures it remains undamaged by the action of the drill. The first component of the target is designed to allow a replacement second component to be attached to it so that the target may be reused. The region configured to securely hold the second component in a hole is ideally designed to be destroyed by the drilling action and allow the target to fall away before the whole of the second component is destroyed.

The second component in the form of a plug may be plastic or aluminium or some similar material that is frangible under the contact with a drill or other machining activity.

The targets of the present invention may be secured to each other in series or any other arrangement such as a loom of targets so that when a series of holes are drilled causing the targets to fall away from the holes the whole loom may easily be retrieved from the drilling operation for re-use once the second components have been replaced with new components.

The targets of the present invention and such looms and their use enable one man operation of drilling and allow for efficient one man operation of drilling operation.

The new design of electronic target of the present invention is a modular design.

Two types are shown in the accompanying figures. One is a straight target design and the other is right angle, the overall dimensions can be adapted depending on the size of the hole for alignment and the nature of the drilling operations. The key dimension is that the plug element has at least one dimension about its external circumference which is such that it allows the plug and target to be held in place by friction.

The two major features of the target design of the present invention are that the construction is modular and that it can be easily repaired. In addition, the alinement plug or pin has been designed to locate in the hole of a structure and once inserted will stay in position typically via friction without any outside assistance.

By modular is meant that the target system has a base target component that is reusable and a disposable plug or pin that secures the target to the structure to be drilled.

The alignment plug or pin is simple and replaceable and if required a sacrificial part, this feature will allow the operator to drill a hole without removing the target as it will drop out when the drill reaches the sacrificial plug or pin, thereby protecting the main re-usable alignment components of the target and electrical systems within the body of the target.

During manufacture of for example aircraft wings many different hole sizes are required to facilitate this and thus the replaceable plugs or pins can be manufactured in many different sizes with a universal fitting to the re-usable part of the target, therefore a single target can be used to align many different sizes of pilot hole or pre-holes. This means that a single target design can be adapted to be used in a wide variety of holes in terms of width and depth by using a kit of pins/plugs according to the invention.

In a preferred design the re-usable component of the target has a lock ring screwed in to the top of the target. This has two functions. The first is to provide a suitable reference surface for abutting the target to the surface to be aligned e.g. wing support and thus making sure that the alignment is normal to the surface of the structure. Secondly the locking pin has an undercut recess to allow the plug/pin to lock into position onto the reusable part of the target. Alignment of the sacrificial plug/pin is achieved by locating the sacrificial pin onto a protruding steel pin within the main body of the reusable target. This steel pin is designed to terminate below the surface of the lock ring and therefore cannot be damaged should the user try to drill through to the reusable part of the target either accidentally or as designed in the manufacturing process. The sacrificial plug/pin (which could be made of any suitable material) will be drilled away and the mechanism that holds it in place i.e. compression ring (bumps) around its external circumference will be drilled away before the main body of the target is drilled and the whole target assembly including damaged sacrificial plug/pin will fall away from the structure being drilled.

The modular target of the present invention may be attached by its control cable to a hook or structure with strain relief so that it does not fall any great distance and to assist in removal from the structure.

The sacrificial plus/pins of the present invention may be colour coded by size to assist the operator in choosing the correct size for any hole. When and if the sacrificial plug/pin is damaged, the remnants can be pulled from the lock ring assembly and replaced or the lock ring may be removed to aid replacement of the sacrificial plug/pin.

Multiple modular targets of the invention may be fitted closely together if required into the structure before drilling as they do not affect each other and can be activated and deactivated remotely from their electronic control box. the control box may be controlled by the operator via a remote handset or a computer inked to the control box. The communication can be either wired or wireless.

### BRIEF DESCRIPTION OF THE DRAWINGS

Embodiments of the invention will now be described, by way of example only, with reference to the accompanying figures, in which:
Figure 1A shows a perspective view of a target according to a first embodiment of the invention;
Figure 1B shows an end view of the target shown in Figure 1A, in which the section plane A-A relates to Figure 1C;
Figure 1C shows a cross-sectional view of the target shown in Figure 1A, taken through the section plane A-A indicated in Figure 1B;
Figure 2A shows a perspective view of a target according to a second embodiment of the invention;
Figure 2B shows an end view of the target shown in Figure 2A, in which the section plane A-A relates to Figure 2C;
Figure 2C shows a cross-sectional view of the target shown in Figure 2A, taken through the section plane A-A indicated in Figure 2B;
Figures 3A and 3B show perspective views of a component of a target according to a third embodiment of the invention;
Figure 3C shows a side view of the component shown in Figure 3A, in which the section plane A-A relates to Figure 3D;
Figure 3D shows a cross-sectional view of the component shown in Figure 3A, taken through the section plane A-A indicated in Figure 3C;
Figure 3E shows an end view of the component shown in Figure 3A, in which the section plane D-D relates to Figure 3F;
Figure 3F shows a cross-sectional view of the component shown in Figure 3A, taken through the section plane D-D indicated in Figure 3E;
Figures 4A and 4B show perspective views of a component of a target according to a fourth embodiment of the invention;
Figure 4C shows a side view of the component shown in Figure 4A, in which the section plane A-A relates to Figure 4D;
Figure 4D shows a cross-sectional view of the component shown in Figure 4A, taken through the section plane A-A indicated in Figure 4C;
Figure 4E shows an end view of the component shown in Figure 4A, in which the section plane D-D relates to Figure 4F;
Figure 4F shows a cross-sectional view of the component shown in Figure 4A, taken through the section plane D-D indicated in Figure 4E;
Figures 5A and 5B show perspective views of a component of a target according to a fifth embodiment of the invention;
Figure 5C shows a side view of the component shown in Figure 5A, in which the section plane A-A relates to Figure 5D;
Figure 5D shows a cross-sectional view of the component shown in Figure 5A, taken through the section plane A-A indicated in Figure 5C;
Figure 5E shows a side view of the component shown in Figure 5A, in which the section plane D-D relates to Figure 5F; and
Figure 5F shows a cross-sectional view of the component shown in Figure 5A, taken through the section plane D-D indicated in Figure 5E;

Dimensions shown in the above-described figures will be understood as non-limiting; the dimensions will vary depending upon the various applications of embodiments of the invention.

### DETAILED DESCRIPTION

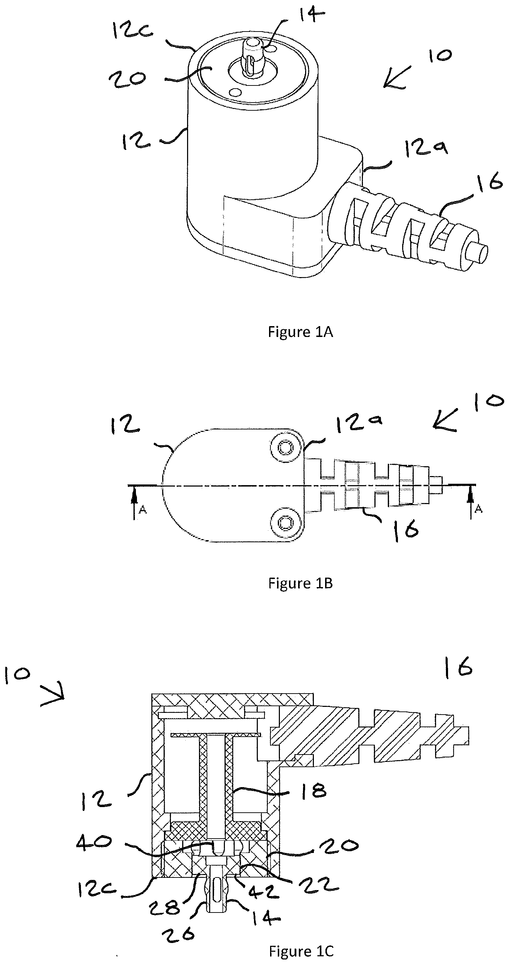

Referring to Figures 1A to 1C, a target 10 comprises a first component 12 and second component 14. Thus, the target 10 is a modular target, or target assembly. The first component 12 has a magnetic source or an electromagnetic source, which, at least in use, may generate a magnetic field. The second component 14 is attachable to the first component 12 and is configured for securing the first component 12 proximate an object for alignment. It should be noted that that the term "object" as used herein is intended to cover a wide variety of possibilities, including, in particular, a hole. The second component 14 may be in the form of a plug that is insertable into a hole, e.g. a hole to be drilled.

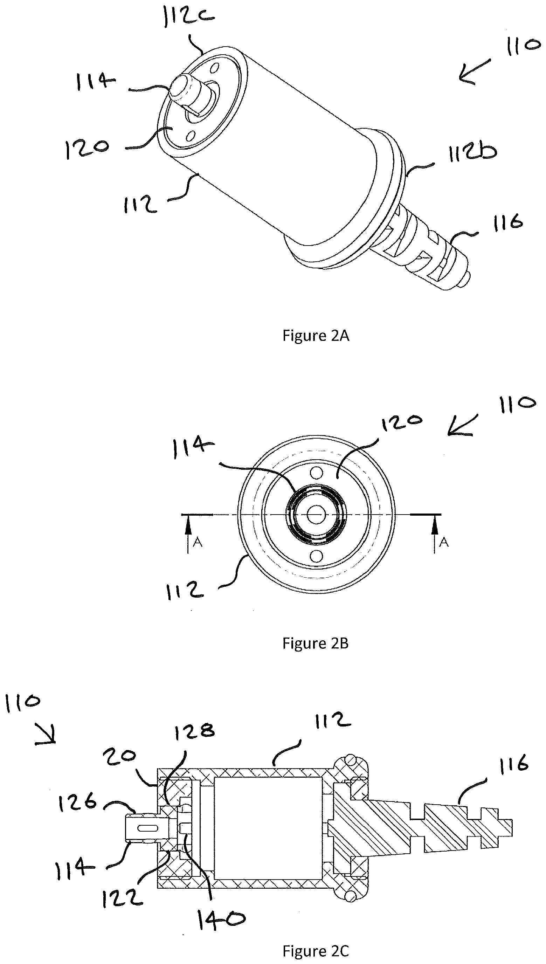

The first component 12 may include a cable grommet 16 for facilitating electrical connection of the target 10 to an alignment system. As shown in Figures 1A to 1C, the cable grommet 16 may extend from a side 12a of the first component 12 to form a substantially right-angled arrangement. An alternative embodiment is shown in Figures 2A to 2C, in which like features are denoted by reference numerals offset by a factor of 100. As shown in Figures 2A to 2C, the cable grommet 116 may extend from a base, or end, 112b of the first component 112 to form a substantially straight arrangement. The first component 12 may also include coil former 18 for forming, at least in part, the electromagnetic source. In alternative embodiments, other magnetic or electromagnetic sources may be provided.

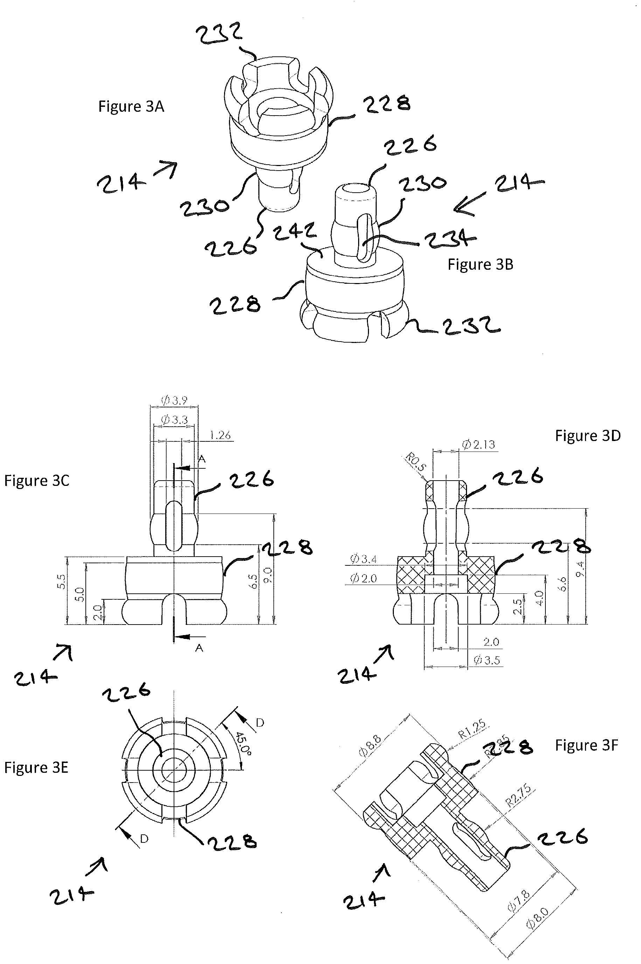

The second component 14 is sacrificial. Thus, the first component 12 allows a replacement second component to be attached to it so that the target 10 may be reused, e.g. in the event that the second component 14 becomes damaged. To this end, the second component 14 may be plastic or aluminium or some other material that is frangible by contact with a drill or other machining activity. Simple replacement of the second component 14 makes the target 10 easily repairable. Once the second component 14 becomes damaged it may be simply disposed of. As shown in the accompanying figures, the second component 14 may have a stem portion 26 and a base portion 28 (most clearly shown in Figures 3A onwards). The stem portion 26 has a diameter that is less than a diameter of the base portion 28. Thus, a shoulder 42 may be formed between the stem portion 26 and the base portion 28.

To facilitate attachment of the first component 12 and the second component 14 to one another, the first component 12 may comprise a locking, or lock, ring 20 that is screwable to the top, or front, 12c of the first component 12. The locking ring 20 has a recess 22 that receives at least part of the base portion 28, with the stem portion 26 extending through an opening of the locking ring 20. With the base portion 28 received in recess 22 and the locking ring 20 screwed to the first component 12, the stem portion 26 extends from the front 12c of the first component 12 for insertion into a hole to be drilled. The first component 12 includes a pin 40 onto which the second component 14 is mounted to locate the second component 14 relative to the first component 12. The pin 40 does not extend from the front 12c of the target 10, thus preventing damage to the pin 40 in use. The second component 14 is retained within the first component 12 by abutment of the shoulder 42 against the locking ring 20, i.e. the diameter of the base portion 28 is greater than a diameter of the opening of the locking ring 20. The locking ring 20 may also provide a reference surface 24 that ensures that an axis of the magnetic field, that generated by the magnetic or electromagnetic source, is substantially normal to a surface against which the target 10 is abutted.

Referring to Figures 3A onwards, alternative embodiments of the second component 14 are shown, in which like features are denoted by reference numerals offset by a factor of 100. The base portion 228 may include an annular protrusion 232 that extends around part of the base portion 228, i.e. extends around part of an external circumference of the base portion 228. As shown in the illustrated embodiments, the annular protrusion 232 may be discontinuous. The annular protrusion 232 may facilitate forming a tight fit between the second component 214 and the locking ring 20. As will be understood, upon insertion of the second component 214 into the recess 22, the annular protrusion 232 may deform radially inwardly. Thus, the inherent resilience of the material from which the base portion 232 is made may cause the base portion to exert a radially outward force against the recess 22 to form a tight fit therebetween. The annular protrusion 232 may facilitate positioning of the second component 214 relative to the first component 12.

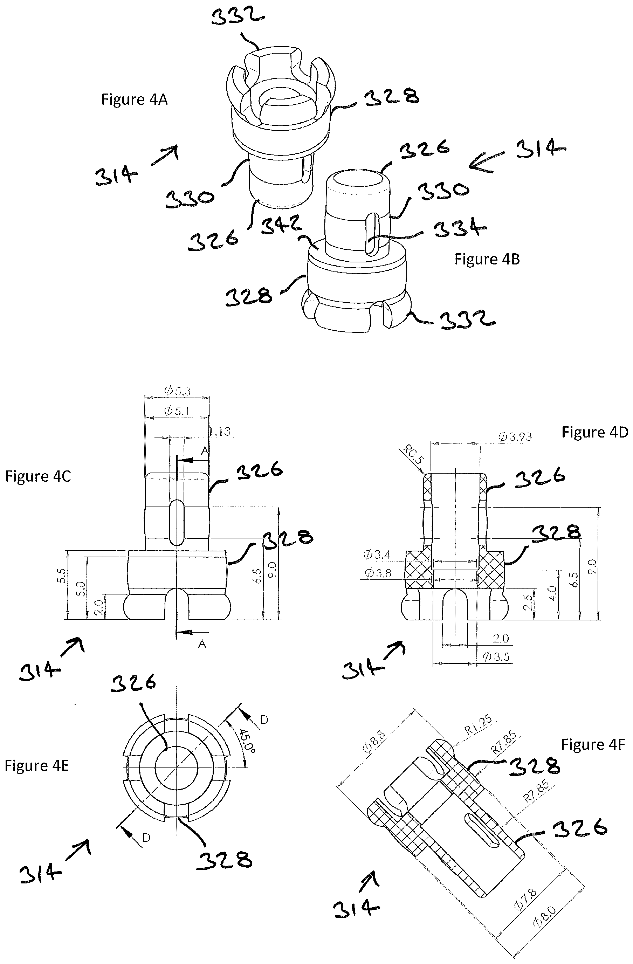

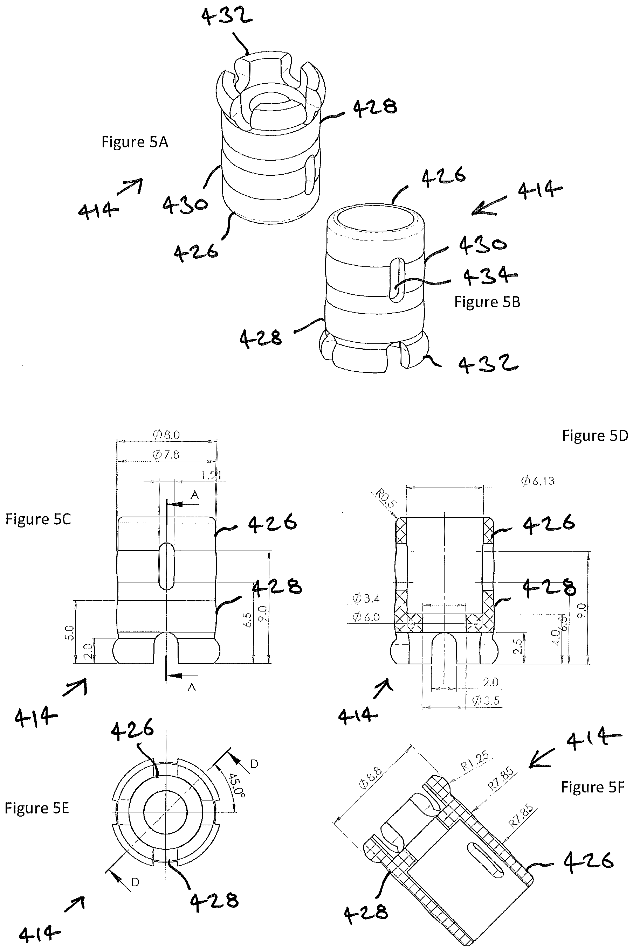

The second component 214 has a region which is designed to ensure it is securely held in the hole to be drilled. To this end, the stem portion 226 may include an enlarged region, or compression ring, 230, i.e. a mechanism that holds the target 10 in the hole to be drilled, that extends around part of the stem portion 226, i.e. extends around part of an external circumference of the stem portion 226. The enlarged region 230 may facilitate forming a tight fit between the second component 214 and the hole to be drilled. As will be understood, upon insertion of the second component 214 into the hole to be drilled, the enlarged region 230 may deform radially inwardly. Thus, the inherent resilience of the material from which the stem portion 226 is made may cause the enlarged region 230 to exert a radially outward force against the hole to be drilled to form a tight fit therebetween. The stem portion 226 may further include at least one stem aperture 234 extending through a region of stem portion 226. The stem aperture 234 may facilitate deformation of the stem portion 226, particularly deformation of the enlarged region 230. Figures 4A-F and 5A-F shown alternative embodiments of the second component 214, having different ratios of the size and/or shape of the stem portion 226 to the base portion 228.

Embodiments of the invention have particular application in the manufacture of aircraft, which is subject to tight tolerance limits. By way of example only, a widely-used technique in the manufacture of aircraft is the application of a metal plate, or skin, to an underlying frame, e.g. spars, such as spars of a wing. The skin and the spar are typically connected to the other, e.g. by a rivet or special fastener. To do this, holes in each of the skin and the spar need to coincide and this coincidence needs to be particularly accurate. If there is inaccuracy, riveting may be rendered more difficult, or even impossible, and inadequately fitting or misapplied rivets can become loosened when the aircraft is in service, leading to potentially catastrophic failure. Accordingly, the requirements for accurate matching of the hole in the skin with the hole in the spar are very stringent and the penalty for inadequate accuracy may well be the failure of the finished assembly to meet the required rigorous safety standards. Financial penalties may also be levied against manufacturers.

The spar may be provided with pre-formed, or pilot, holes. However, working from the outside, i.e. working with the skin between an operator and the spar means that the positions of the holes cannot be seen. To locate a non-visible hole, i.e. a hole obscured by the skin, the target 10 may be inserted into one of the pre-formed holes, i.e. the hole to be drilled, by insertion of the stem portion 26 in to the preformed hole, e.g. on a side of the hole that is opposite to the skin. The magnetic field generated by the magnetic or the electromagnetic source spreads out through the skin, centred on the centre of the hole to be drilled. Preferably, the magnetic field is symmetrical. The field strength of the magnetic field may then be detected through the skin by a sensing means, e.g. as described in WO2004/016380, which discloses a device having an array of hall effect sensors. WO2010/052480 describes alternative sensing means. By appropriate processing of the signals, i.e. the magnetic field, sensed by the sensing means, the location of the maximum magnetic field, and thus the centre of the hole to be drilled, can be identified. A tool for mechanical processing, e.g. drilling, may then be aligned with the centre of the hole to be drilled.

On drilling of the hole, the second component 14 may be broken up by the action of the drill, thus enabling the target 10 to fall away from the hole for secure and safe removal and ensuring that it remains undamaged by the action of the drill. Specifically, the enlarged region 230 may be destroyed by the drilling action to allow the target 10 to fall away from the hole before the whole of the second component 14 is destroyed. Thus, the second component 14 may prevent damage to or destruction of the first component 12. The operator may drill a hole without removing the target 10, as it may drop out when the drill reaches the second component 14, thereby protecting the reusable components of the target 10.

Of course, many different hole sizes may be required, thus the second component 14 may be manufactured in many different sizes, i.e. having different diameters of the stem portion 26, while fitting the first component 12. Thus, the target 10 may be used to align many different sizes preformed-holes.

The claims should not be construed to cover merely the foregoing embodiments, but also any embodiments which fall within the scope of the claims.

## Claims

1. A target (10; 100) for use in an alignment system, the target comprising a first component (12; 112) having a magnetic or electromagnetic source and a second component (14; 114; 214; 314; 414) being attachable to the first component, the second component being a sacrificial component for securing the first component (12; 112) proximate an object for alignment,
**characterised in that** the second component (14; 114; 214; 314; 414) comprises a region configured to securely hold the second component in a hole.

2. A target (10; 100) according to claim 1, wherein the second component (14; 114; 214; 314; 414) is in the form of a plug insertable into a hole.

3. A target (10; 100) according to claim 1 or claim 2, wherein at least a region of the second component (14; 114; 214; 314; 414) is frangible by contact of a drill or other machining activity.

4. A target (10; 110) according to any preceding claim, wherein the second component (14; 114; 214; 314; 414) comprises a stem portion (26; 126; 226; 326; 426) and a base portion (28; 128; 228; 328; 428), the stem portion having a diameter that is less than a diameter of the base portion.

5. A target (10; 110) according to any preceding claim, wherein the first component (12; 122) comprises a locking ring (20; 120) screwable to the target to facilitate attachment of the second component (14; 114; 214; 314; 414) to the first component.

6. A target (10; 110) according to claim 5 when dependent on claim 4, wherein the locking ring (20; 120) comprises a recess (22; 122) in which the base portion (25; 128; 228; 328; 428) is receivable to at least in part locate the second component (14; 114; 214; 314; 414) relative to the first component (12; 112).

7. A target (10; 110) according to claim 5 or 6, wherein the locking ring (20; 120) comprises a reference surface (24; 124) that ensures that an axis of a magnetic field generated by the magnetic or electromagnetic source is substantially normal to a surface against which the target is abutted.

8. A target (10; 110) according to any preceding claim, wherein the first component (12; 112) comprises a pin (40; 140) upon which the second component (14; 114; 214; 314; 414) is mountable to at least in part locate the second component relative to the first component.

9. A target (10; 100) according to claim 4, or any preceding claim dependent upon claim 4, wherein the region configured to hold the second component in a hole is provided as an enlarged region (230; 330; 430) of the stem portion (26; 126; 226; 326; 426), the enlarged region having a larger diameter than the diameter of the remainder of the stem portion.

10. A target (10; 100) according to claim 9, wherein the stem portion (26; 126; 226; 326; 426) comprises an aperture (234; 334; 434) extending at least in part through the enlarged region (230; 330; 430).

11. A target (10; 100) according to claim 3, or any preceding claim dependent upon claim 3, wherein the region configured to securely hold the second component (14; 114; 214; 314; 414) in a hole is the at least a region of the second component that is frangible by contact of a drill or other machining activity.

12. A target (10; 100) according to claim 4, or any preceding claim dependent upon claim 4, wherein the base portion (28; 128; 228; 328; 428) comprises an annular protrusion (228; 328; 428) having a diameter that is larger than a diameter of the remainder of base portion.

13. A workpiece comprising an aperture having a target (10; 110) according to any of claims 1 to 14 mounted thereto; and
sensing means configured to sense a location of a magnetic field of the magnetic or electromagnetic source for alignment with the aperture.

14. A method of machining a workpiece, the method comprising:
providing a workpiece having an aperture;
inserting a target (10; 110) according to any of claims 1 to 14 in the aperture of the workpiece; and
aligning a sensing means configured to sense a location of a magnetic field of the magnetic or electromagnetic source for alignment with the aperture to guide machining of the workpiece.

## Patentansprüche

1. Target (10; 100) zur Verwendung in einem Ausrichtungssystem, wobei das Target eine erste Komponente (12; 112) mit einer magnetischen oder elektromagnetischen Quelle und eine zweite Komponente (14; 114; 214; 314; 414) umfasst, die an der ersten Komponente anbringbar ist, wobei die zweite Komponente eine Opferkomponente zum Sichern der ersten Komponente (12; 112) in der Nähe eines Objekts zum Ausrichten ist,
**dadurch gekennzeichnet, dass** die zweite Komponente (14; 114; 214; 314; 414) einen Bereich umfasst, der konfiguriert ist, um die zweite Komponente sicher in einem Loch zu halten.

2. Target (10; 100) nach Anspruch 1, wobei die zweite Komponente (14; 114; 214; 314; 414) die Form eines in ein Loch einführbaren Stopfens hat.

3. Target (10; 100) nach Anspruch 1 oder Anspruch 2, wobei zumindest ein Bereich der zweiten Komponente (14; 114; 214; 314; 414) durch Kontakt eines Bohrers oder einer anderen Bearbeitungstätigkeit zerbrechlich ist.

4. Target (10; 110) nach einem der vorhergehenden Ansprüche, wobei die zweite Komponente (14; 114; 214; 314; 414) einen Schaftabschnitt (26; 126; 226; 326; 426) und einen Basisabschnitt (28; 128; 228; 328; 428) umfasst, wobei der Schaftabschnitt einen Durchmesser aufweist, der kleiner als ein Durchmesser des Basisabschnitts ist.

5. Target (10; 110) nach einem der vorhergehenden Ansprüche, wobei die erste Komponente (12; 122) einen Sicherungsring (20; 120) umfasst, der an das Target schraubbar ist, um die Befestigung der zweiten Komponente (14; 114; 214; 314; 414) an der ersten Komponente zu ermöglichen.

6. Target (10; 110) nach Anspruch 5, wenn abhängig von Anspruch 4, wobei der Sicherungsring (20; 120) eine Aussparung (22; 122) umfasst, in der der Basisabschnitt (25; 128; 228; 328; 428) aufnehmbar ist, um die zweite Komponente (14; 114; 214; 314; 414) zumindest teilweise relativ zu der ersten Komponente (12; 112) zu lokalisieren.

7. Target (10; 110) nach Anspruch 5 oder 6, wobei der Sicherungsring (20; 120) eine Referenzfläche (24; 124) umfasst, die sicherstellt, dass eine Achse eines Magnetfelds, das von der magnetischen oder elektromagnetischen Quelle erzeugt wird, im Wesentlichen senkrecht zu einer Oberfläche ist, an der das Target anliegt.

8. Target (10; 110) nach einem der vorhergehenden Ansprüche, wobei die erste Komponente (12; 112) einen Stift (40; 140) umfasst, an dem die zweite Komponente (14; 114; 214; 314; 414) montierbar ist, um die zweite Komponente zumindest teilweise relativ zu der ersten Komponente zu lokalisieren.

9. Target (10; 100) nach Anspruch 4 oder einem der vorhergehenden, von Anspruch 4 abhängigen Ansprüche, wobei der Bereich, der zum Halten der zweiten Komponente in einem Loch konfiguriert ist, als vergrößerter Bereich (230; 330; 430) des Schaftabschnitts (26; 126; 226; 326; 426) bereitgestellt ist, wobei der vergrößerte Bereich einen größeren Durchmesser als der Durchmesser des Rests des Schaftabschnitts aufweist.

10. Target (10; 100) nach Anspruch 9, wobei der Schaftabschnitt (26; 126; 226; 326; 426) eine Öffnung (234; 334; 434) umfasst, die sich zumindest teilweise durch den vergrößerten Bereich (230; 330; 430) erstreckt.

11. Target (10; 100) nach Anspruch 3 oder einem der vorhergehenden, von Anspruch 3 abhängigen Ansprüche, wobei der Bereich, der zum sicheren Halten der zweiten Komponente (14; 114; 214; 314; 414) in einem Loch konfiguriert ist, der mindestens eine Bereich der zweiten Komponente ist, der durch Kontakt eines Bohrers oder einer anderen Bearbeitungstätigkeit zerbrechlich ist.

12. Target (10; 100) nach Anspruch 4 oder einem der vorhergehenden, von Anspruch 4 abhängigen Ansprüche, wobei der Basisabschnitt (28; 128; 228; 328; 428) einen ringförmigen Vorsprung (228; 328; 428) umfasst, der einen Durchmesser aufweist, der größer als ein Durchmesser des Rests des Basisabschnitts ist.

13. Werkstück, umfassend eine Öffnung, an der ein Target (10; 110) nach einem der Ansprüche 1 bis 14 montiert ist; und
eine Erfassungseinrichtung, die konfiguriert ist, um einen Ort eines Magnetfelds der magnetischen oder elektromagnetischen Quelle zur Ausrichtung mit der Öffnung zu erfassen.

14. Verfahren zum Bearbeiten eines Werkstücks, wobei das Verfahren umfasst:
Bereitstellen eines Werkstücks mit einer Öffnung;
Einführen eines Targets (10; 110) nach einem der Ansprüche 1 bis 14 in die Öffnung des Werkstücks; und
Ausrichten einer Erfassungseinrichtung, die konfiguriert ist, um einen Ort eines Magnetfelds der magnetischen oder elektromagnetischen Quelle zur Ausrichtung mit der Öffnung zu erfassen, um das Bearbeiten des Werkstücks zu führen.

## Revendications

1. Cible (10 ; 100) destinée à être utilisée dans un système d'alignement, la cible comprenant un premier composant (12; 112) ayant une source magnétique ou électromagnétique et un second composant (14 ; 114 ; 214 ; 314 ; 414) pouvant être fixé au premier composant, le second composant étant un composant sacrificiel pour fixer le premier composant (12 ; 112) à proximité d'un objet pour alignement,
**caractérisé en ce que** le second composant (14 ; 114 ; 214 ; 314 ; 414) comprend une région configurée pour maintenir solidement le second composant dans un trou.

2. Cible (10 ; 100) selon la revendication 1, dans laquelle le second composant (14 ; 114 ; 214; 314 ; 414) se présente sous la forme d'un bouchon insérable dans un trou.

3. Cible (10 ; 100) selon la revendication 1 ou la revendication 2, dans laquelle au moins une région du second composant (14 ; 114 ; 214 ; 314 ; 414) est cassable par contact d'un foret ou une autre opération d'usinage.

4. Cible (10 ; 110) selon l'une quelconque des revendications précédentes, dans laquelle le second composant (14; 114 ; 214 ; 314 ; 414) comprend une partie de tige (26; 126 ; 226 ; 326 ; 426) et une partie de base (28 ; 128 ; 228 ; 328 ; 428), la partie de tige ayant un diamètre qui est inférieur à un diamètre de la partie de base.

5. Cible (10 ; 110) selon l'une quelconque des revendications précédentes, dans laquelle le premier composant (12 ; 122) comprend une bague de verrouillage (20 ; 120) vissable sur la cible pour faciliter la fixation du second composant (14 ; 114 ; 214 ; 314 ; 414) au premier composant.

6. Cible (10 ; 110) selon la revendication 5 lorsqu'elle dépend de la revendication 4, dans laquelle la bague de verrouillage (20 ; 120) comprend un évidement (22 ; 122) dans lequel la partie de base (25 ; 128 ; 228 ; 328 ; 428) est recevable pour positionner au moins en partie le second composant (14; 114 ; 214 ; 314 ; 414) par rapport au premier composant (12 ; 112).

7. Cible (10; 110) selon la revendication 5 ou 6, dans laquelle la bague de verrouillage (20 ; 120) comprend une surface de référence (24; 124) qui garantit qu'un axe d'un champ magnétique généré par la source magnétique ou électromagnétique est sensiblement normal à une surface contre laquelle la cible est en butée.

8. Cible (10 ; 110) selon l'une quelconque des revendications précédentes, dans laquelle le premier composant (12 ; 112) comprend une broche (40 ; 140) sur laquelle le second composant (14 ; 114 ; 214 ; 314 ; 414) peut être monté pour localiser au moins en partie le second composant par rapport au premier composant.

9. Cible (10; 100) selon la revendication 4, ou l'une quelconque des revendications précédentes dépendant de la revendication 4, dans laquelle la région configurée pour maintenir le second composant dans un trou est prévue comme une région agrandie (230 ; 330 ; 430) de la partie de tige (26 ; 126 ; 226 ; 326 ; 426), la région agrandie ayant un diamètre plus grand que le diamètre du reste de la partie de tige.

10. Cible (10 ; 100) selon la revendication 9, dans laquelle la partie de tige (26 ; 126 ; 226 ; 326 ; 426) comprend une ouverture (234 ; 334 ; 434) s'étendant au moins en partie à travers la région agrandie (230 ; 330 ; 430).

11. Cible (10; 100) selon la revendication 3, ou l'une quelconque des revendications précédentes dépendant de la revendication 3, dans laquelle la région configurée pour maintenir solidement le second composant (14; 114 ; 214 ; 314 ; 414) dans un trou est l'au moins une région du second composant qui est cassable par contact d'un foret ou une autre opération d'usinage.

12. Cible (10; 100) selon la revendication 4, ou l'une quelconque des revendications précédentes dépendant de la revendication 4, dans laquelle la partie de base (28 ; 128; 228 ; 328 ; 428) comprend une saillie annulaire (228 ; 328 ; 428) ayant un diamètre qui est plus grand qu'un diamètre du reste de la partie de base.

13. Pièce à usiner comprenant une ouverture sur laquelle est montée une cible (10 ; 110) selon l'une quelconque des revendications 1 à 14 ; et
des moyens de détection configurés pour détecter un emplacement d'un champ magnétique de la source magnétique ou électromagnétique pour alignement avec l'ouverture.

14. Procédé d'usinage d'une pièce à usiner, le procédé comprenant :
la fourniture d'une pièce à usiner ayant une ouverture ;
l'insertion d'une cible (10 ; 110) selon l'une quelconque des revendications 1 à 14 dans l'ouverture de la pièce à usiner ; et
l'alignement d'un moyen de détection configuré pour détecter un emplacement d'un champ magnétique de la source magnétique ou électromagnétique pour alignement avec l'ouverture afin de guider l'usinage de la pièce à usiner.
